# EUROPEAN PATENT APPLICATION

(11) **EP 3 396 632 A1**
(43) Date of publication of application: **31.10.2018**
(21) Application number: 15911356.2
(22) Date of filing: 24.12.2015
(51) Int. Cl.: G06T 11/80

(54) **IMAGE PROCESSING DEVICE, IMAGE PROCESSING METHOD, AND IMAGE PROCESSING PROGRAM**

(71) Applicant: Fujitsu Limited, Kawasaki-shi, Kanagawa 211-8588 (JP)
(72) Inventor: TAKAHASHI, Fumiyuki, Kawasaki-shi Kanagawa 211-8588 (JP); NAGATO, Tsuyoshi, Kawasaki-shi Kanagawa 211-8588 (JP); OKAMOTO, Hiroaki, Kawasaki-shi Kanagawa 211-8588 (JP); KOEZUKA, Tetsuo, Kawasaki-shi Kanagawa 211-8588 (JP)
(74) Representative: Haseltine Lake LLP
(86) International application number: PCT/JP2015/086126
(87) International publication number: WO 2017/109918

(57) **Abstract**

Techniques are provided to generate highly accurate target pictures.

An input picture generation unit (1a) generates a virtually photographed picture including an object (3) of interest photographed in a virtual space (2) and outputs the virtually photographed picture as an input picture (11a) for use in generating an image processing program through learning. A target picture generation unit (1b) receives selection of feature data corresponding to a feature portion (3a) of the object (3) of interest, from among geometric data (1c) representing a three-dimensional shape of the object (3) of interest. The target picture generation unit (1b) calculates a projected position of the feature portion (3a) in the input picture (11a), based on the feature data, and generates a target picture (12a) corresponding to the input picture (11a), based on the calculated projected position.

## Description

### Technical Field

The embodiments discussed herein relate to an image processing apparatus, an image processing method, and an image processing program.

### Background Art

Image processing algorithms have been what the persons with specialized skills in the art create on a trial-and-error basis, taking advantage of their knowledge and experience. However, recent years have seen the development of automatic programming techniques that generate image processing programs having desired functions by using an optimization method such as genetic algorithm, genetic programming, and simulated annealing (SA). The noted techniques include a process of learning from input pictures and their processing results (e.g., target pictures). One example technique using a genetic programming method is to generate an image processing program by combining multiple sub-programs (e.g., image filter programs) while optimizing it with input pictures and their processing results.

Also proposed is an information processing apparatus that generates training pictures for learning of a discrimination device, which estimates the orientation of an object of interest. This information processing apparatus sets at least one viewpoint for observing a geometric model of a certain object of interest and outputs a picture of that observed geometric model as a training picture when the viewpoint and the geometric model satisfy specific conditions.

### Citation List

### Patent Literature

PTL1: Japanese Laid-open Patent Publication No. 2014-157509

### Non-Patent Literature

NPTL1: Shinya Aoki and Tomoharu Nagao, "ACTIT: Automatic construction of tree-structural image transformations," Journal of the Institute of Image Information and Television Engineers Vol.53, No.6, June 20, 1999, p.890-892

### Summary of Invention

### Technical Problem

Target pictures used in automatic generation of image processing programs may be generated by, for example, applying some image processing operations (e.g., retouches by the operator) to relevant input pictures. The accuracy of such methods, however, depends on the skill and personality of individual operators and may therefore fail to provide proper target pictures. Consequently, the generated image processing program would only be able to perform image processing with a degraded accuracy. For example, input pictures are obtained by photographing an object of interest, including a feature portion to be recognized, while varying imaging parameters and other conditions about the surroundings. This means that the feature portion of the object may appear in different ways in different input pictures, and the operator may often fail to locate the feature portion correctly. The resulting target pictures would therefore be less accurate.

In one aspect, it is an object of the present invention to provide an image processing apparatus, image processing method, and image processing program that can generate highly accurate target pictures.

### Solution to Problem

According to one proposed technique, there is provided an image processing apparatus including an input picture generation unit and a target picture generation unit. The input picture generation unit generates a virtually photographed picture including an object of interest photographed in a virtual space, and it outputs the virtually photographed picture as an input picture for use in generating an image processing program through learning. The target picture generation unit receives selection of feature data corresponding to a feature portion of the object of interest, from among geometric data representing a three-dimensional shape of the object of interest, calculates a projected position of the feature portion in the input picture, based on the feature data, and generates a target picture corresponding to the input picture, based on the projected position.

According to another proposed technique, there is provided an image processing method for a computer to operate similarly to the above-noted image processing apparatus.

According to yet another proposed technique, there is provided an image processing program that causes a computer to execute a process that is similar to what the above image processing apparatus performs.

### Advantageous Effects of Invention

In one aspect, the proposed techniques make it possible to generate highly accurate target pictures.

The above and other objects, features and advantages of the present invention will become apparent from the following description when taken in conjunction with the accompanying drawings which illustrate preferred embodiments of the present invention by way of example.

### Brief Description of Drawings

[FIG. 1] FIG. 1 illustrates, by way of example, a structure of an image processing apparatus according to a first embodiment, as well as a process that it performs.
[FIG. 2] FIG. 2 illustrates an example hardware configuration of a program generation apparatus according to a second embodiment.
[FIG. 3] FIG. 3 is a block diagram illustrating an example of processing functions that the program generation apparatus provides.
[FIG. 4] FIG. 4 illustrates an example of image processing operations that a generated image processing program offers.
[FIG. 5] FIG. 5 illustrates examples of input pictures.
[FIG. 6] FIG. 6 illustrates an example of virtual facilities to be constructed.
[FIG. 7] FIG. 7 illustrates examples of input pictures to be generated.
[FIG. 8] FIG. 8 is a flowchart illustrating an example of a procedure performed by a training data generation unit.
[FIG. 9] FIG. 9 is a flowchart illustrating how a target picture is generated by way of example.
[FIG. 10] FIG. 10 illustrates an example of pictures created in the course of target picture generation.
[FIG. 11] FIG. 11 illustrates an example of a tree structure representing an individual.
[FIG. 12] FIG. 12 illustrates another example of a tree structure representing an individual.
[FIG. 13] FIG. 13 is a flowchart illustrating an example of how to generate an image processing program with genetic programming techniques.
[FIG. 14] FIG. 14 illustrates a first example of image processing using a generated image processing program together with input pictures and target pictures.
[FIG. 15] FIG. 15 illustrates a second example of image processing using a generated image processing program together with input pictures and target pictures.

### Description of Embodiments

Several embodiments of the present invention will be described below with reference to the accompanying drawings.

### [First Embodiment]

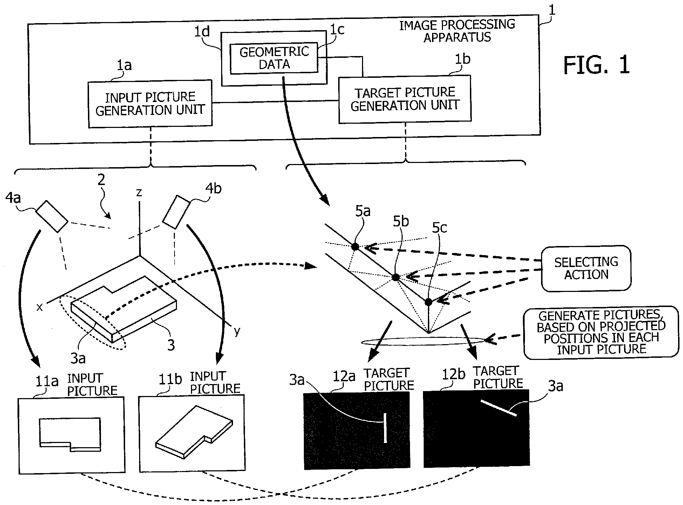

FIG. 1 illustrates, by way of example, a structure of an image processing apparatus according to a first embodiment, as well as a process that it performs. The illustrated image processing apparatus 1 of FIG. 1 is a device that generates input pictures and target pictures for the purpose of generating an image processing program through learning. This image processing apparatus 1 includes an input picture generation unit 1a and a target picture generation unit 1b. For example, the image processing apparatus 1 may have a processor, and this processor executes some specific programs to provide processing functions of the input picture generation unit 1a and target picture generation unit 1b.

The input picture generation unit 1a virtually photographs an object 3 of interest in a three-dimensional virtual space 2 and outputs the resulting virtually photographed pictures for use as input pictures. In the example seen in FIG. 1, an input picture 11a is generated by virtually photographing the object 3 of interest with a camera 4a placed in the virtual space 2. Another input picture 11b is generated by virtually photographing the object 3 of interest, but with a different camera 4b placed separately from the camera 4a. In these two input pictures 11a and 11b, the object 3 of interest appears oriented in different directions. It is noted that the input picture generation unit 1a generates at least one input picture.

The target picture generation unit 1b has access to geometric data 1c that represents the three-dimensional shape of the object 3 of interest. For example, the geometric data 1c includes three-dimensional coordinates of two or more portions of the object 3 of interest in the virtual space 2. The geometric data 1c may be stored in, for example, a storage unit 1d that the image processing apparatus 1 provides. The storage unit 1d is implemented as a storage area of a storage device in the image processing apparatus 1.

The target picture generation unit 1b receives selection of feature data out of the geometric data 1c, the feature data corresponding to a feature portion 3a of the object 3 of interest. For example, the feature portion 3a may be a portion that a generated image processing program is supposed to extract from a given picture. For example, feature data is selected as follows.

The target picture generation unit 1b receives selection of data of vertices associated with the feature portion 3a, from among the vertices of polygons representing the shape of the object 3 of interest. More specifically, the target picture generation unit 1b causes a polygon model to be displayed on a monitor device (not illustrated) to present the shape of the object 3 of interest as a combination of polygons, and receives selection of some polygonal vertices associated with the feature portion 3a. The target picture generation unit 1b then extracts data about the selected vertices from the geometric data 1c. The extracted data is referred to as feature data.

Referring to the example of FIG. 1, the feature portion 3a is a linear edge on the object 3 of interest. Vertices 5a to 5c on this edge are selected from the polygon model of the object 3 of interest, meaning that feature data of the feature portion 3a is selected as a set of three-dimensional coordinates of the vertices 5a to 5c, for example.

As an alternative, one desired piece of geometric data may be selected as feature data from a list of geometric data elements corresponding to selectable portions as candidates for the feature portion 3a. Such selectable portions may include, for example, vertices, line segments, and polygons.

The target picture generation unit 1b calculates a projected position of the feature portion 3a in one generated input picture 11a, based on its feature data. The target picture generation unit 1b generates a target picture 12a corresponding to the input picture 11a on the basis of this calculated projected position. Similarly, the target picture generation unit 1b calculates a projected position of the feature portion 3a in another generated input picture 11b on the basis of its feature data. The target picture generation unit 1b generates a target picture 12b corresponding to the input picture 11b on the basis of the calculated projected position.

For example, the target picture generation unit 1b transforms three-dimensional coordinates of each vertex 5a to 5c into projected coordinates, assuming that the vertices 5a to 5c are projected on one input picture 11a, and draws its feature portion 3a on the basis of the resulting projected coordinates, thereby generating a target picture 12a. Referring to the example of FIG. 1, the feature area 3a has been drawn at the place given by projected coordinates in a target picture 12a that is equal in size to the input picture 11a. Similarly, the target picture generation unit 1b transforms three-dimensional coordinates of each vertex 5a to 5c into projected coordinates, assuming that the vertices 5a to 5c are projected on another input picture 11b, and draws the feature portion 3a on the basis of the resulting projected coordinates, thereby generating a target picture 12b. Referring to the example of FIG. 1, the feature portion 3a has been drawn at the place given by projected coordinates in a target picture 12b that is equal in size to the input picture 11b.

The following method may be used to generate a target picture corresponding to, for example, the input picture 11a. For example, one possible method is to extract a feature portion 3a from the input picture 11a in response to an operator's action and generate a target picture by making some retouching or other image processing operations on the input picture 11a. The input picture 11a, however, does not always contain clear images of the object 3 of interest or its feature portion 3a since input pictures, including the input picture 11a, are taken under a variety of imaging conditions. With unclear images, the operator would not be able to determine the exact location of the feature portion 3a. Consequent poor quality of target pictures would spoil the generated image processing program, thus degrading the accuracy of its image processing operations.

In contrast to the above, the image processing apparatus 1 according to the first embodiment selects feature data corresponding to a feature portion 3a of the object 3 of interest, out of the geometric data 1c representing three-dimensional geometry of the object 3 of interest. Then based on the selected feature data, the image processing apparatus 1 calculates a projected position of the feature portion 3a in an input picture 11a, and generates a target picture 12a corresponding to the input picture 11a, based on the calculated projected position. The image processing apparatus 1 makes it possible to generate a target picture 12a with a high accuracy regardless of how the feature portion 3a appears in the input picture 11a.

### [Second Embodiment]

A program generation apparatus according to a second embodiment will now be described below. This program generation apparatus according to the second embodiment includes not only the functions of generating input pictures and target pictures as in the image processing apparatus 1 discussed in FIG. 1, but also the functions of automatically generating image processing programs using the generated input pictures and target pictures.

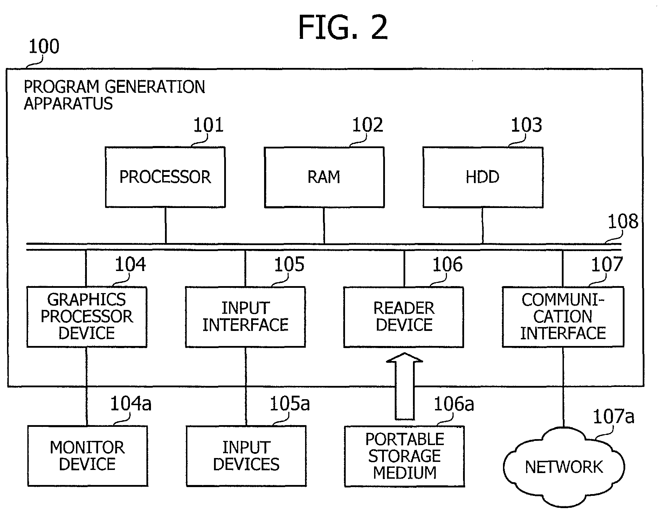

FIG. 2 illustrates an example hardware configuration of a program generation apparatus according to the second embodiment. This program generation apparatus 100 according to the second embodiment is implemented as a computer illustrated in FIG. 2, for example.

The illustrated program generation apparatus 100 has a processor 101 to control its entire operation. The processor 101 may be a multiprocessor system. For example, the processor 101 may be a central processing unit (CPU), micro processing unit (MPU), digital signal processor (DSP), application specific integrated circuit (ASIC), or programmable logic device (PLD). The processor 101 may also be implemented as a combination of two or more of CPU, MPU, DSP, ASIC, and PLD.

The processor 101 is connected to a random access memory (RAM) 102 and several peripheral devices via a bus 108.

The RAM 102 is used as the primary storage device of the program generation apparatus 100. The RAM 102 temporarily stores at least some of the operating system (OS) programs and application programs that the processor 101 executes, as well as various data objects that the processor 101 may need at runtime.

Peripheral devices connected to the bus 108 include a hard disk drive (HDD) 103, a graphics processor device 104, an input interface 105, a reader device 106, and a communication interface 107.

The HDD 103 is used as a secondary storage device of the program generation apparatus 100. The HDD 103 stores OS programs and application programs, as well as various data objects. Other possible secondary storage devices include solid-state drives (SSD) and other kinds of non-volatile storage devices.

A monitor device 104a is coupled to the graphics processor device 104. The graphics processor device 104 produces video images in accordance with commands from the processor 101 and displays them on a screen of the monitor device 104a. The monitor device 104a may be a liquid crystal display, organic electro-luminescence (EL) display, or the like.

Input devices 105a are coupled to the input interface 105. The input interface 105 receives signals from these input devices 105a and sends them to the processor 101. The input devices 105a include keyboards and pointing devices, the latter including mice, touchscreens, tablets, touchpads, trackballs, and the like.

A portable storage medium 106a may be attached to and detached from the reader device 106. The reader device 106 reads data from the attached portable storage medium 106a and sends it to the processor 101. Portable storage media 106a include optical discs, magneto-optical discs, semiconductor memory devices, and the like.

The communication interface 107 exchanges data with other devices via a network 107a.

The above-described hardware platform may be used to implement processing functions of the program generation apparatus 100.

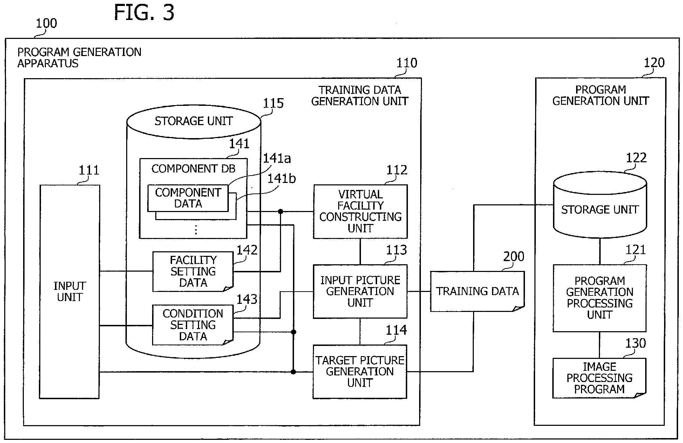

FIG. 3 is a block diagram illustrating an example of processing functions that the program generation apparatus provides. The illustrated program generation apparatus 100 includes a training data generation unit 110 and a program generation unit 120. For example, the processor 101 implements processing functions of the training data generation unit 110 and program generation unit 120 by executing individual application programs corresponding thereto. Alternatively, the same may be implemented in a single consolidated application program.

The training data generation unit 110 generates training data 200 for use by the program generation unit 120 to generate an image processing program 130. The training data 200 includes input pictures and target data. The target data indicates desired processing results that the generated image processing program 130 is expected to yield when it processes input pictures. The present embodiment assumes that target data is generated in the form of pictures, but it is also possible to provide target data in the form of numerical values, such as positional coordinates.

The program generation unit 120 automatically generates an image processing program 130 through learning from one or more sets of generated training data 200. For example, the program generation unit 120 may use a genetic programming method to generate an image processing program 130.

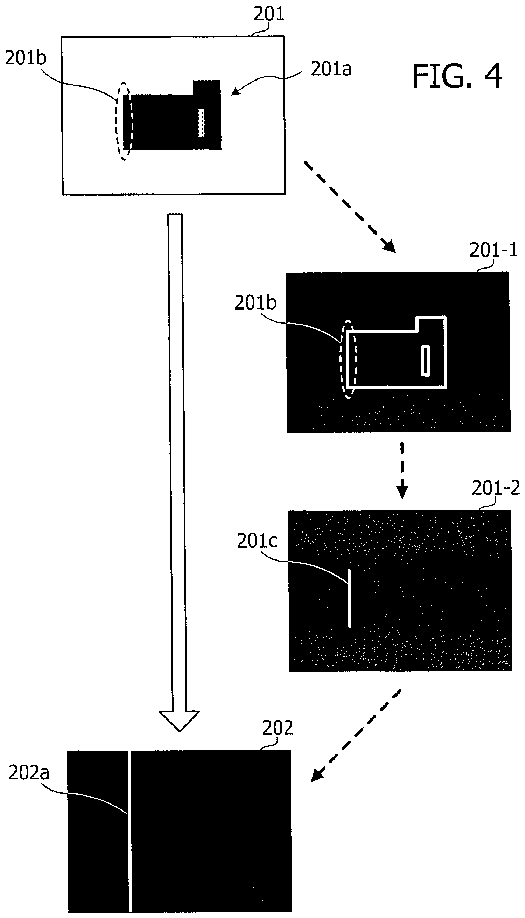

FIG. 4 illustrates an example of image processing operations that a generated image processing program offers. What the image processing program 130 offers as image processing operations include edge detection, area detection, and template matching. FIG. 4 illustrates an example of edge detection.

Referring to FIG. 4, an input picture 201 and an output picture 202 are illustrated. The input picture 201 is a photographed picture that is subjected to the generated image processing program 130, while the output picture 202 is a picture that the image processing program 130 is expected to generate as its processing result. Seen in the input picture 201 in the example of FIG. 4 is a photographed object 201a of interest, in which the image processing program 130 is supposed to detect a straight line 202a representing a specific edge 201b of the object 201a. Alternatively, a line segment 201c representing the edge 201b alone may be detected, as seen in a picture 201-2, rather than the straight line 202a traversing the entire picture.

The subject of edge detection is not limited to linear edges, but it may also include circular edges. An example of area detection is to detect a rectangular area that encloses the contour of the object 201a of interest in FIG. 4. Another example is to detect lost areas or flaw areas that the object 201a of interest may have. An example of template matching is to detect positional coordinates of a reference point of the object 201a of interest in a photographed picture by using an image of the object 201a as a template.

The image processing program 130 may be used in the field of factory automation (FA), for example, for the purpose of obtaining some desired result by processing photographed pictures of a specific product or component. For example, pictures of a product are taken and subjected to image processing operations to extract particular points for adjustment of the product's alignment or to locate damaged portions if any.

The above-noted usage entails optimization of image processing algorithms according to variations of the facility environment where products or components are placed as the subject of photographs, or according to changes or updates made to such products and components. This optimization needs appropriate training data for learning, provided according to the environmental variations of facilities and changes of products and components.

Generally speaking, input pictures are prepared as part of training data by photographing a physical object of interest placed in actual production facilities or by photographing a prototype object in experimental facilities constructed for validation purposes. It is difficult, however, to physically reproduce every possible environmental variation that may actually happen. Another problem is that such physical reproduction entails a large amount of labor and increased working hours.

Suppose, for example, the case in which the image processing program 130 is used in manufacturing facilities to adjust alignment of products and conduct visual inspection of products. The manufacturing facilities are brought into operation after the process of design, development, and deployment. In this course, the image processing program 130 is usually validated just before the deployment of the manufacturing facilities, and if any problem is found in the accuracy of image processing, the image processing program 130 is subjected to an optimization process including re-learning with a new set of input pictures and target pictures. However, time-consuming preparation of input pictures for this re-learning would delay the start of manufacturing operation in the facilities commensurately.

The training data also includes target pictures, and these target pictures are created through a process in which, for example, the operator designates desired edges or desired area outlines through input operations using a mouse or the like while viewing one of the above-prepared input pictures on the monitor screen. Alternatively, target pictures may be generated by applying various image processing operations to input pictures according to commands from the operator. Referring to the example of FIG. 4, a picture 201-1 has been obtained by applying an edge-detecting image processing operation to the input picture 201. This picture 201-1 indicates extracted contour edges of the object 201a of interest. The operator then specifies a desired edge 201b while removing other things from the picture 201-1. The resulting picture 201-2 thus contains a line segment 201c alone.

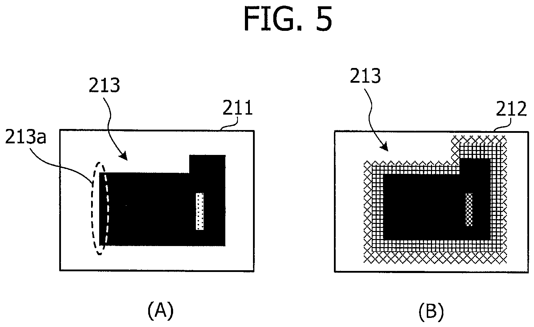

One drawback of the above-described method is, however, that it places a large burden on the operator and thus results in increased working hours. Also, the accuracy of target pictures may deviate depending on the skill and personality of the operator, thus degrading the accuracy of image processing of a resulting image processing program 130. In addition, the operator may even find hard to create proper target pictures in some cases, as will be discussed below with reference to FIG. 5.

FIG. 5 illustrates examples of input pictures. Both input pictures 211 and 212 seen in FIG. 5(A) and FIG. 5(B) contain a photographed image of an object 213 of interest. The image in the latter input picture 212 is considerably blurry, whereas the one in the former input picture 211 is clear. The operator is unable to determine where in the latter input picture 212 a particular edge 213a of the photographed object 213 of interest resides. It is therefore difficult for the operator to create a proper target picture from that input picture 212 through his or her actions.

In view of the above difficulties, the present embodiment proposes a training data generation unit 110 that constructs virtual facilities by using computer-aided design (CAD) data, so as to virtually reproduce the facilities in which an object of interest is to be placed as the subject of photographs. This training data generation unit 110 receives input information that specifies how the conditions for photographing (e.g., light source conditions, locations of movable components, position and orientation of the object of interest, and camera parameters) are changed at the virtual facilities when input pictures are virtually taken. The training data generation unit 110 then configures the virtual facilities in accordance with the received conditions, places the object of interest in the virtual facilities in accordance with the received conditions, and generates input pictures by capturing images of the placed object with a virtual camera.

The above-described embodiment makes it possible to virtually reproduce various conditions of facilities and take pictures of an object of interest under the reproduced conditions, thus obtaining input pictures without using physical facilities. This means that the task of generating input pictures is performed with an improved efficiency and less working hours.

Aside from the above-described setups of virtual facilities and an object of interest on the basis of given conditions, the training data generation unit 110 receives an input that specifies a part of CAD data of the photographed object. The specified part of CAD data corresponds to a recognition region of interest, indicating which part of the photographed object to recognize. More specifically, the training data generation unit 110 causes the monitor device 104a to display a polygon model of the object of interest and allows the operator to select vertices of his or her desired recognition region of interest, from among those on the displayed polygon model. The training data generation unit 110 then determines coordinate data of the selected vertices.

The training data generation unit 110 calculates projected positions of the selected vertices in the input picture, based on the coordinate data determined above, and generates a projection picture from the result of this calculation, such that individual vertices are projected on a picture that is equal in size to the input picture. The training data generation unit 110 generates a target picture by determining specific straight lines or curved lines, or a specific area enclosed by such lines, based on the vertex locations in the projection picture and drawing the determined lines or area.

The above method allows the operator to select CAD data corresponding to at least part of the recognition region of interest, rather than letting him or her to determine the region in an input picture that is generated. The method then conducts a projective transformation on the basis of the selected CAD data, just as it has done to generate input pictures. This enables generation of highly accurate target pictures.

Referring back to FIG. 3, the description continues below.

The training data generation unit 110 includes an input unit 111, a virtual facility constructing unit 112, an input picture generation unit 113, and a target picture generation unit 114. The training data generation unit 110 also has access to a storage unit 115, which is implemented as a storage space in the RAM 102 or HDD 103, for example. The storage unit 115 stores therein a component database (DB) 141, facility setting data 142, and condition setting data 143.

The component database 141 stores multiple pieces of component data 141a, 141b, ... that represent individual components of virtual facilities and an object of interest to be photographed. Each of the component data 141a, 141b, ... includes data elements indicating the shape, outer surface color, surface reflectivity, and the like of an individual component. Virtual facilities are formed from various components, including those that support the object of interest, actuator units used to change the object's position, cameras, and light sources. Each component is expressed as a set of data about vertices of polygons representing the component's shape.

For example, the component database 141 may be a database used by a CAD program. When this is the case, the CAD program may include a program that implements the training data generation unit 110.

The facility setting data 142 is a dataset for reproducing a particular circumstance in a virtual space where the virtual facilities and object of interest are placed. Specifically, the facility setting data 142 includes data about the position, orientation, and operational state of individual components of the virtual facilities and object of interest. Some components may be variable in their positions and operations, and the facility setting data 142 contains predetermined default values for their variable states.

The condition setting data 143 includes values of various parameters that specify the imaging conditions for taking input pictures. The parameters include those that define the position and orientation of the object of interest and each component of virtual facilities, operational state of each component of the virtual facilities, and optical conditions (e.g., color and reflectivity of outer surfaces) of the virtual facilities or the object of interest. The object of interest may further have parameters indicating its damage, soil, size, location, and the like.

The parameters indicating operational state include lighting condition parameters about light sources and camera parameters concerning cameras. Lighting conditions include light intensity, radiation angle, attenuation of light intensity per distance, and others. Camera parameters include focal length of image-forming lenses, angle of view, focal position, number of pixels, pixel size, and information about lens aberrations (e.g., distortion and chromatic aberration).

In the case of generating multiple input pictures, variation ranges of setting values are described as part of the condition setting data 143, so that the imaging conditions are varied from picture to picture. Suppose, for example, that the illuminance of a light source has to be varied each time a picture is taken. The variation range of illuminance in this case may be given as "illuminance X1 to X2" or "reference illuminance X ±Y%." The number of steps is further specified in this case to determine how many steps will be taken to divide the above variation range. Alternatively, an increment or decrement per step may be given to determine how much the illuminance is to be varied each time a picture is taken. Another example is to specify a series of specific setting values of a variable imaging condition, as in "X1, X2, X3," for use in individual photographing sessions.

The input unit 111 receives inputs from the operator, including the facility setting data 142 and condition setting data 143 described above. The input unit 111 also accepts a recognition region of interest and an image processing category that the operator specifies for the purpose of generating target pictures.

The virtual facility constructing unit 112 constructs virtual facilities in a three-dimensional space on the basis of the facility setting data 142, by using relevant component data in the component database 141. The virtual facility constructing unit 112 then places an object of interest in the constructed virtual facilities.

The input picture generation unit 113 virtually takes pictures of the object of interest with a camera, while varying the state of the object of interest and some components of the virtual facilities constructed by the virtual facility constructing unit 112, based on the condition setting data 143. These photographing sessions generate input pictures. In this course of input picture generation, a physics-based simulation technique, such as photon mapping and ray tracing, is used to generate virtually photographed pictures of the object of interest, as if it is photographed from a certain camera position within the three-dimensional space. For example, how the object of interest and its surrounding areas are illuminated is determined by the relative positions of components with respect to light sources, as well as by the reflectivity of component surfaces. These things are reproduced in the resulting photographed pictures. It is also possible to reproduce blurriness of images on the basis of camera parameter values.

The target picture generation unit 114 causes the monitor device 104a to display a polygon model of the object of interest, based on component data of the object. Then the target picture generation unit 114 receives, via the input unit 111, an input of vertices associated with a recognition region of interest, specified from among the vertices of the displayed polygon model. The target picture generation unit 114 retrieves three-dimensional coordinates of each specified vertex from the component data. For example, these three-dimensional coordinates are defined in the virtual space accommodating the virtual facilities. The target picture generation unit 114 also accepts a specified image processing category via the input unit 111, which indicates what kind of image processing an image processing program is to execute when it is generated.

With the camera parameters previously used to take input pictures, the target picture generation unit 114 transforms coordinates of the specified vertices to those of projected vertices, assuming that the former vertices are projected onto each input picture. Based on the transformed coordinates of the vertices, the target picture generation unit 114 generates target pictures corresponding to individual input pictures by applying the specified kind of image processing to a projection picture that is equal in size to the individual input pictures. For example, the target picture generation unit 114 determines a straight line or a curved line from the transformed coordinates of vertices, or an area defined by lines from the projection picture, and draws the determined line or area, thereby generating a target picture.

The input pictures generated by the input picture generation unit 113 and the target pictures generated by the target picture generation unit 114 are outputted as training data 200. The input pictures are associated with their corresponding target pictures in the training data 200. The training data 200 is passed to the program generation unit 120 via a storage device (e.g., HDD 103) in the program generation apparatus 100.

The program generation unit 120 includes a program generation processing unit 121. This program generation processing unit 121 has access to a storage unit 122, which is implemented as, for example, a storage space in the RAM 102 or HDD 103.

The storage unit 122 stores therein the training data 200 that the training data generation unit 110 has generated. The program generation processing unit 121 generates an image processing program 130 through learning from the training data 200. Suppose, for example, that genetic programming is used for this purpose. In this case, the storage unit 122 stores various sub-programs (e.g., image processing filters), which may be assigned to the nodes of a tree structure that represents an image processing program. The program generation processing unit 121 executes a learning process using the training data 200 to obtain an optimal combination of sub-programs for the tree structure nodes and thus yields an image processing program 130 that realizes the desired image processing capability.

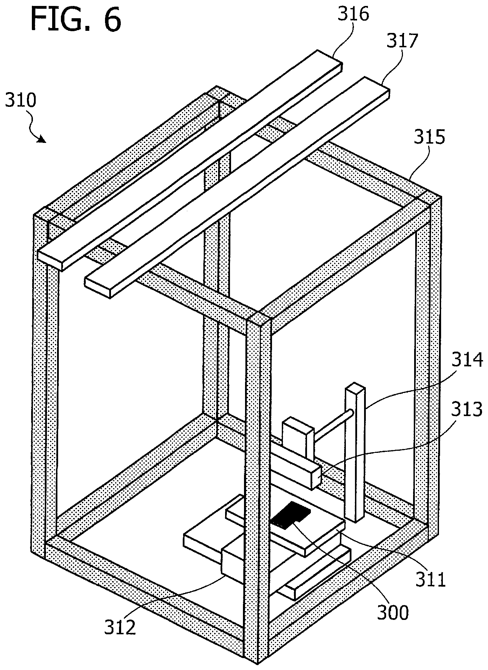

FIG. 6 illustrates an example of virtual facilities to be constructed. The illustrated virtual facilities 310 in FIG. 6 is formed from a mount 311, a driving mechanism 312, a camera 313, a camera driving mechanism 314, a frame 315, and two light sources 316 and 317.

The mount 311 is where an object 300 of interest is placed as the subject of photographs. The driving mechanism 312 changes the location and inclination of the mount 311. The camera 313 takes pictures of the object 300 of interest. The camera driving mechanism 314 changes the location and imaging direction of the camera 313. The frame 315 is where various components, including light sources 316 and 317, are fixed. The light sources 316 and 317 generate illumination light.

The virtual facilities 310 may also have some additional driving mechanisms to change locations and directions of the light sources 316 and 317, for example. Also, the virtual space may contain, for example, walls, floors, and windows to construct a room to accommodate the virtual facilities 310. The virtual space may further include the sun as a light source to illuminate the outside of the room. In this case, the virtual facilities 310 may be reconfigured according to the time of day that is specified, so that the resulting input pictures may reflect the changes in the sun's state. This is accomplished by setting the light source simulating the sun with an appropriate location, direction, and intensity corresponding to the specified time.

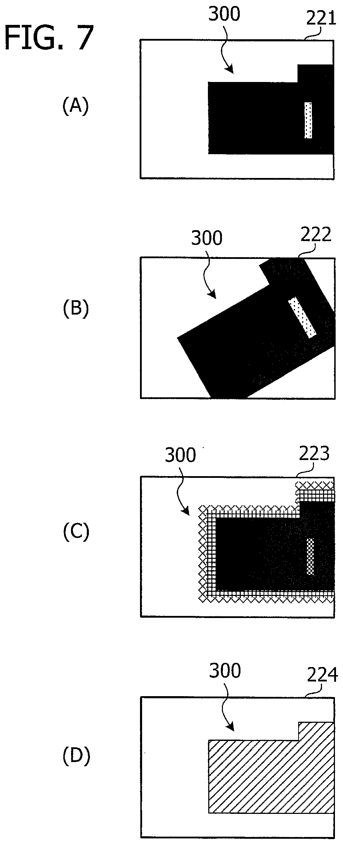

FIG. 7 illustrates examples of input pictures to be generated.

Input pictures 221 and 222 seen in FIG. 7(A) and FIG. 7(B) are obtained by, for example, changing the location (distance between camera 313 and photographed object 300) and orientation of the camera 313 on the basis of condition setting data 143. Alternatively, the same input pictures 221 and 222 may be obtained by changing the position and rotation angle of the mount 311 on which the photographed object 300 of interest is placed.

Another input picture 223, seen in FIG. 7(C), is a blurred version of the above input picture 221. This input picture 223 is obtained by, for example, changing the focal distance (a camera parameter) of the camera so as to deviate from its well-focused state established when the input picture 221 was taken. The input picture 223 may alternatively be obtained by moving the mount 311 to vary the distance between the object 300 of interest and the camera 313.

Yet another input picture 224, seen in FIG. 7(D), is a differently illuminated version of the above input picture 221. Specifically, this input picture 224 has a higher luminance on the visible surface of the object 300 of interest, relative to its original luminance, because of the excessive luminous energy of lighting. For example, the input picture 224 is obtained by raising the luminous energy produced by one light source 316 or 317 so as to deviate from its previous state in which the input picture 221 was taken. The input picture 224 may alternatively be obtained by moving one light source 316 or 317 toward the object 300 of interest.

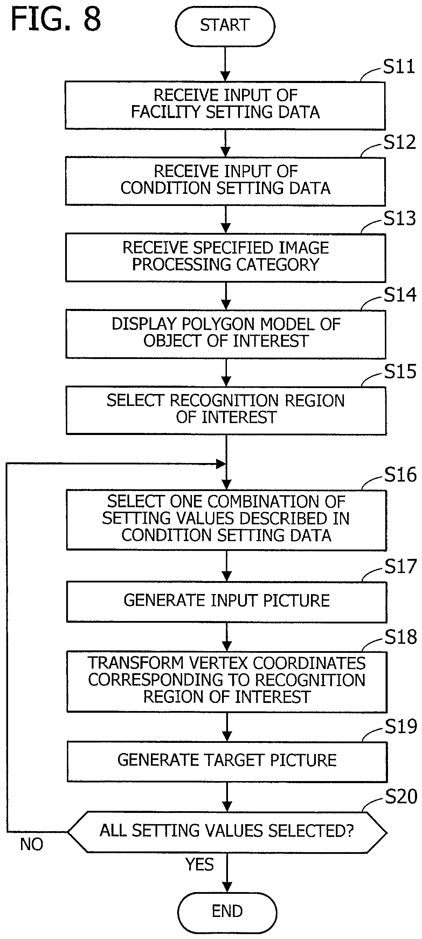

FIG. 8 is a flowchart illustrating an example of a procedure performed by a training data generation unit.

[Step S11] The input unit 111 receives an input of facility setting data 142 according to the operator's actions and stores it in the storage unit 115. Based on the stored facility setting data 142, the virtual facility constructing unit 112 constructs virtual facilities in a three-dimensional space, in which an object of interest is placed as the subject of photographs.

[Step S12] The input unit 111 receives an input of condition setting data 143 according to the operator's actions and stores it in the storage unit 115.

[Step S13] The target picture generation unit 114 receives, via the input unit 111, a specified image processing category, which indicates what kind of image processing an image processing program is to execute when it is generated. Options for this image processing category include, for example, straight edge detection, curved edge detection, circular edge detection, area detection, and template matching. Straight edge detection is a process to detect linear edges of a photographed object of interest. Curved edge detection is a process to detect curved edges of a photographed object of interest. Circular edge detection is a process to detect circular or elliptic edges of a photographed object of interest. Area detection is a process to detect a particular portion (e.g., component, lacked part, flaw) of a photographed object of interest. Template matching is a process to detect an area in which a specific template image is seen.

[Step S14] The target picture generation unit 114 causes the monitor device 104a to display a polygon model of the object of interest, based on the object's component data. This polygon model represents the object as a collection of polygons.

[Step S15] The target picture generation unit 114 receives selection of a recognition region of interest as part of the object of interest by accepting through the input unit 111 the operator's selecting actions on the displayed polygon model. The target picture generation unit 114 uses different methods for selecting a recognition region in this step, depending on the image processing category specified in step S13.

When, for example, straight edge detection, curved edge detection, or circular edge detection has been specified as the image processing category, the target picture generation unit 114 allows selection of vertices on a desired edge, out of the displayed image of the polygon model. When template matching has been specified as the image processing category, the target picture generation unit 114 allows selection of vertices on the outer edge of the object of interest, out of the displayed image of the polygon model. In these cases, the target picture generation unit 114 extracts coordinates of each selected vertex from component data representing the object of interest. Note that, in these cases, the target picture generation unit 114 may also allow selection of line segments of polygons, instead of their vertices, out of the polygon model. In this case, the target picture generation unit 114 extracts coordinates of two end points of each selected line segment.

When, on the other hand, area detection has been specified as the image processing category, the target picture generation unit 114 takes a component, lacked part, or flaw area as a single unit of selection, which is presented in the form of a collection of polygons. Suppose, for example, that the operator has selected a certain component of the object of interest by clicking its area on the display. Upon detection of the clicking action, the target picture generation unit 114 recognizes that the clicked component is selected. The target picture generation unit 114 extracts the coordinates of vertices of each polygon contained in the selected component (or lacked part or flaw area), out of the component data of the object of interest.

The above example assumes that the operator selects vertices and other things from a displayed image of a polygon model. The operator may also be allowed to, for example, make a selection directly from component data of the object of interest. That is, the operator may select desired data from a list of component data representing the above-noted vertices, components, lacked parts, and flaw areas.

[Step S16] The input picture generation unit 113 identifies items in the condition setting data 143 that have variations in their setting values. When two or more such items are identified, the input picture generation unit 113 selects one combination of their setting values. When only one item is identified, the input picture generation unit 113 selects one setting value for that item.

[Step S17] The input picture generation unit 113 causes the selected setting values of step S16 to take effect in the state of virtual facilities and the object of interest placed therein. In this state, the input picture generation unit 113 generates a picture that represents the object of interest photographed with a camera, by using physics-based simulation techniques such as a photon mapping method and a ray tracing method, for example. The generated picture is then outputted as an input picture.

[Step S18] The target picture generation unit 114 transforms three-dimensional coordinates of each vertex identified in step S15 into two-dimensional coordinates, as if those vertices were projected onto the input picture generated in step S17. This transform is performed with some of the camera parameters used in the photographing in step S17, including at least those describing the relative position of the camera with respect to the photographed object of interest.

[Step S19] Based on the transformed coordinates of each vertex, the target picture generation unit 114 generates a target picture corresponding to the input picture by applying a particular process corresponding to the image processing category specified in step S13 to a projection picture that is equal in size to the input picture.

For example, in the case of straight edge detection, the target picture generation unit 114 calculates a straight line that connects vertices on the projection picture. In the case of curved edge detection, the target picture generation unit 114 calculates a curve that connects vertices on the projection picture. In the case of circular edge detection, the target picture generation unit 114 calculates a circle or ellipse that connects vertices on the projection picture. For example, such straight lines, curved lines, circles, or ellipses may be obtained by using a least square approximation method based on two-dimensional coordinates of individual vertices.

In the case of template matching, the target picture generation unit 114 calculates the contour of a recognized object by connecting vertices on the projection picture. In the case of area detection, the target picture generation unit 114 first calculates the contour of a particular region that is recognized, by connecting vertices on the projection picture, and then calculates the location of a rectangular area that encloses the calculated contour.

The target picture generation unit 114 generates a target picture by drawing the above-noted straight line, curve, circle, ellipse, counter, or rectangular area with a particular luminance value distinguishable from other areas. In the case of template matching and area detection, the target picture generation unit 114 may output target data, instead of a target picture, corresponding to the input picture. This target data indicates the location of the detected area or rectangular area in the projection picture.

[Step S20] The target picture generation unit 114 determines whether all the setting values of variable items specified in the condition setting data 143 have been selected. If there is any unselected setting value, the process returns to step S16. If all relevant setting values have been selected, it means the end of the process of generating training data 200.

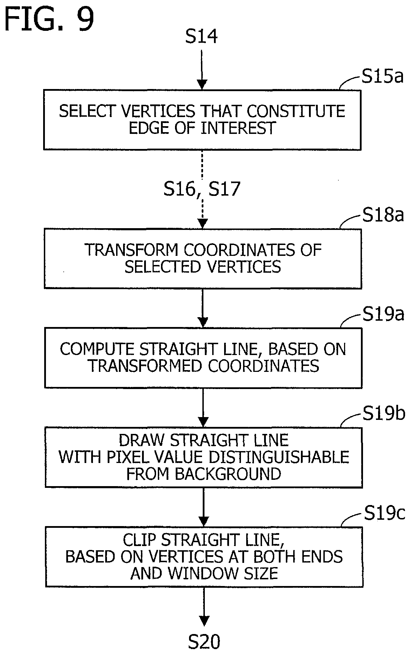

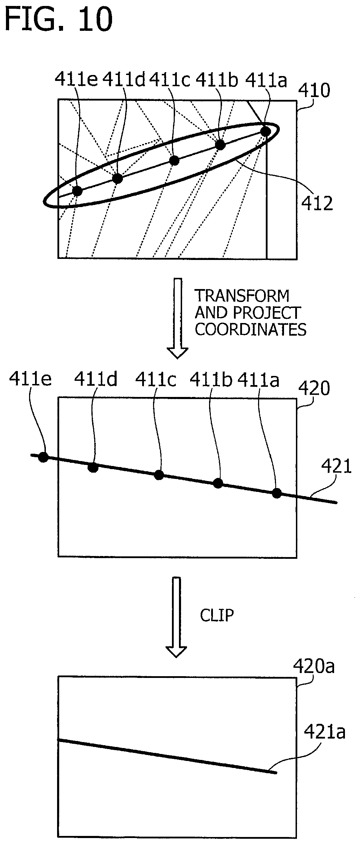

Referring now to FIGS. 9 and 10, the following description will explain an example of a target picture generation process in the case where straight edge detection is specified as an image processing category.

FIG. 9 is a flowchart illustrating how a target picture is generated by way of example. FIG. 10 illustrates an example of pictures created in the course of target picture generation.

[Step S15a] This step corresponds to step S15 in FIG. 8. The target picture generation unit 114 receives an input of selected vertices that constitute a linear edge to be recognized, as part of the displayed polygon model. One picture 410 in FIG. 10 depicts a polygon model by way of example. The dotted lines in this picture 410 represent boundaries between polygons. The example in the picture 410 assumes that the operator has selected vertices 411a to 411e as part of an edge portion 412.

Steps S16 and S17 in FIG. 8 are subsequently executed, and the process then proceeds to step S18a described below. This step S18a corresponds to step S18 in FIG. 8.

[Step S18a] Based on the camera parameters used previously in photographing the current input picture, the target picture generation unit 114 transforms the three-dimensional coordinates of vertices 411a to 411e into two-dimensional coordinates, assuming that those vertices are projected onto the input picture.

The next three steps S19a to S19c correspond to the processing described for step S19 in FIG. 8.

[Step S19a] Based on the transformed two-dimensional coordinates of vertices 411a to 411e, the target picture generation unit 114 calculates an equation representing a straight line by using a least square method or the like.

[Step S19b] The target picture generation unit 114 generates a projection picture that is equal in size to the input picture and has a monotone background. The target picture generation unit 114 draws the straight line on this projection picture, based on the equation calculated above, using a pixel value that is different from the background's. FIG. 10 illustrates a picture 420 that is equal in size to the input picture and has a monotonous background color, in which a straight line 421 has been drawn on the basis of the calculated equation. Note that, in this particular example, one vertex 411e was not seen in the field of view when the current input picture was taken.

[Step S19c] The target picture generation unit 114 clips the straight line 421 by removing its outer pixels extending from both ends of the edge portion 412 of interest, as well as those outside the window of the picture 420. As a result of the clipping operation, the picture 420 in FIG. 10 is transformed into a new picture 420a, and this picture 420a is outputted as a target picture.

The removal of outer straight-line pixels extending from the ends of the edge portion 412 is optional in this step S19c. The operator is allowed to make a choice between doing it and skipping it.

The above-described process performed by the training data generation unit 110 makes it possible to efficiently generate input pictures in a shorter time, while photographing an object of interest and its surrounding areas under a variety of imaging conditions.

Also, the above-described process allows the operator to select CAD data (three-dimensional coordinates) corresponding to a recognition region of interest, rather than generating target pictures by transforming input pictures according to operator commands. This enables correct selection of a recognition region of interest even if the region appears unclear in some input pictures. The recognition region of interest based on the selected CAD data is then projected on an input picture, and the result of this projection is used to generate a target picture corresponding to the input picture. The proposed process can therefore generate target pictures with a high accuracy, regardless of how the object of interest is imaged in input pictures. The generated target pictures are used in the learning process for generating an image processing program 130. The resulting image processing program 130 is thus able to process images with a high accuracy.

The next section will explain processing operations of the program generation unit 120. As an example, the explanation assumes that the program generation unit 120 generates an image processing program 130 using the techniques of genetic programming.

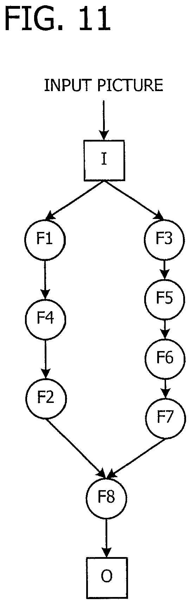

FIG. 11 illustrates an example of a tree structure representing an individual. When genetic programming is used for generation of an image processing program 130, individuals are each formed as a combination of one or more sub-programs. For example, each individual is represented in tree structure form as seen in FIG. 11. Candidate sub-programs for constructing such individuals are prepared in the storage unit 122.

The following explanation assumes, for example, that each sub-program is actually an image filter. It is not intended, however, to limit sub-programs to image filters, but other kinds of image processing program may similarly be used. Referring to FIG. 11, the symbols "F1" to "F8" represent image filters, and "I" and "O" respectively represent an input terminal and an output terminal. The individuals organized in a tree structure as in FIG. 11 are capable of straight edge detection, curved edge detection, circular edge detection, and area detection, out of the foregoing image processing categories, when a picture arrives at the input terminal I.

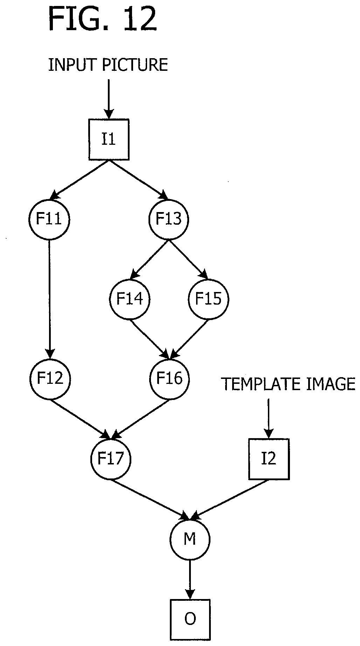

FIG. 12 illustrates another example of a tree structure representing an individual. This example tree structure of FIG. 12 is used for template matching. The individual illustrated in FIG. 12 has two input terminals I1 and I2. The former input terminal I1 is for entering input pictures, and the latter input terminal I2 is for entering template images, so that an area corresponding to a template image within the input picture or information about its location will be outputted. The symbols "F11" to "F17" represent an example of image filters, and "M" is a sub-program for matching between an output picture of the image filter F17 and a template image supplied from the input picture 12.

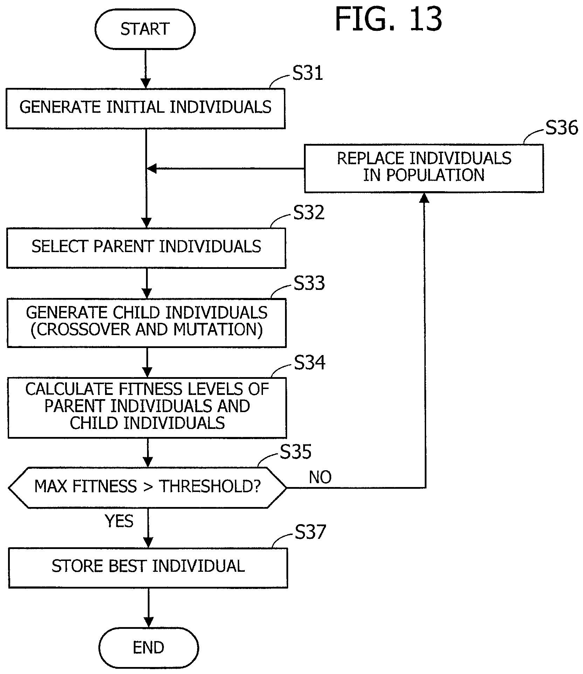

FIG. 13 is a flowchart illustrating an example of how to generate an image processing program with genetic programming techniques.

[Step S31] The program generation processing unit 121 generates initial individuals to form a population. Specifically, image filters are randomly selected from among a prepared set of image filters and embedded into the nodes of each initial individual.

[Step S32] The program generation processing unit 121 randomly selects a fixed number of parent individuals out of the population. The description now assumes, for example, that two parent individuals are selected.

[Step S33] The program generation processing unit 121 subjects the selected two parent individuals to an evolution process, thus producing a fixed number of (two or more) child individuals. The evolution process performs crossover and mutation on two parent individuals. Three or more child individuals may be produced by applying different crossover operations and different mutation operations to two parent individuals.

[Step S34] The program generation processing unit 121 calculates fitness of each parent individual selected in step S32 and each child individual produced in step S33. This process executes image processing operations using each individual of interest with respect to each input picture included in the training data 200 and compares the resulting picture with the corresponding target picture to calculate their fitness level. When the training data 200 has a plurality of input-target picture pairs, the program generation processing unit 121 obtains a plurality of fitness levels for each single individual using the plurality of input-target picture pairs, and then calculates an average value of those fitness levels.

Fitness levels of initial individuals in the population may be calculated at the time when the population is created in step S31. In this case, the fitness calculation in step S34 is limited to child individuals that are produced.

[Step S35] The program generation processing unit 121 determines whether any one of the produced child individuals and original parent individuals has a larger fitness level than a specified threshold. If the fitness of every individual is smaller than or equal to the threshold, the process proceeds to step S36. If one or more individuals have fitness levels exceeding the threshold, the process advances to step S37.

[Step S36] The program generation processing unit 121 selects surviving individuals from the parent individuals selected in step S32 and the child individuals produced in step S33. For example, the program generation processing unit 121 selects a first surviving individual by finding one individual having the largest fitness level, and then a second surviving individual by picking up one of the remaining individuals according to the probabilities corresponding to their respective fitness levels. The program generation processing unit 121 now replaces the two parent individuals selected from the population in step S32 with the first and second surviving individuals, thus updating the population to a new generation.

[Step S37] The program generation processing unit 121 selects the best individual among the parent individuals selected in step S32 and child individuals produced in step S33 by determining which one has the largest fitness level. The selected best individual now gives an optimized image processing program 130. The program generation processing unit 121 stores tree structure data representing the selected best individual into a storage space in the storage unit 122 or the like.

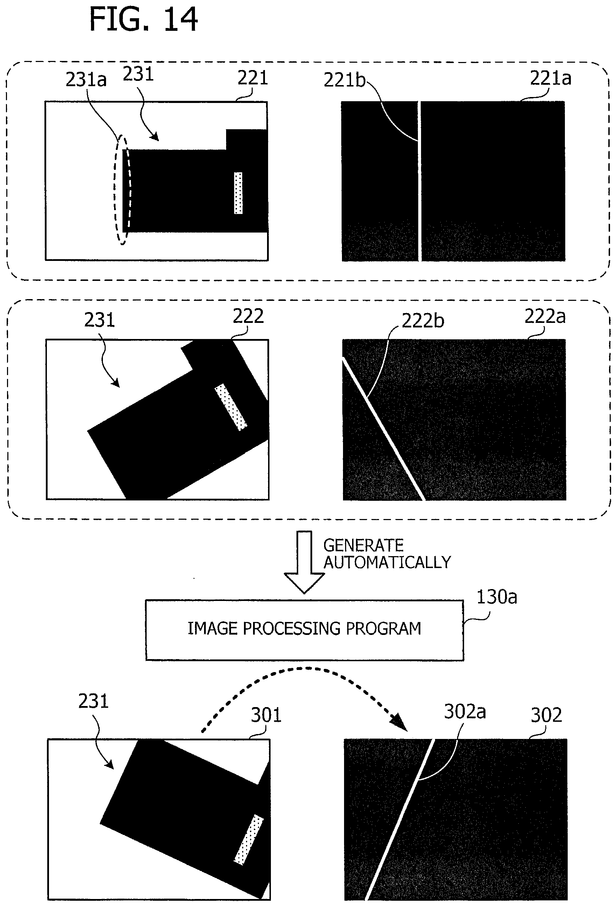

FIG. 14 illustrates a first example of image processing using a generated image processing program together with input pictures and target pictures. This example of FIG. 14 assumes that two input pictures 221 and 222 discussed in FIG. 7 and their corresponding target pictures 221a and 222a have been generated by the training data generation unit 110. The target pictures 221a and 222a respectively include straight lines 221b and 222b drawn along an edge portion 231a of a photographed object 231 of interest. The program generation unit 120 generates an image processing program 130a through learning from these input pictures 221 and 222 and target pictures 221a and 222a.

The object 231 of interest may be photographed in the actual facilities using a camera, and a picture 301 is presented as an example of such real photographed pictures. The above-generated image processing program 130a processes this picture 301 and outputs a picture 302 with a detected straight line 302a accurately matching with the edge portion 231a.

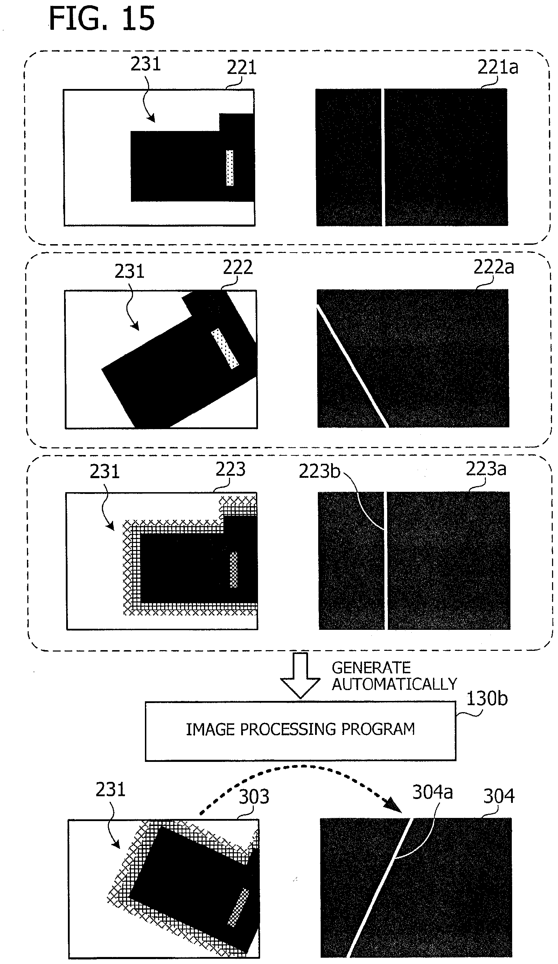

FIG. 15 illustrates a second example of image processing using a generated image processing program together with input pictures and target pictures. The image processing program 130a generated by the foregoing processing of FIG. 14 may be used to analyze a photographed picture containing a blurry image as in the input picture 223 in FIG. 7. But it is highly probable that the image processing program 130a fails to detect an edge portion 231a properly from this photographed picture. Accordingly, in the case where blurry images increasingly appear in photographed pictures taken in the actual facilities, the image processing program is subjected to a re-learning process using, for example, an input picture 223 in FIG. 7 and its corresponding target picture 223a in addition to the input pictures 221 and 222 and target pictures 221a and 222a discussed in FIG. 14. Another image processing program 130b is generated through this re-learning process.

The object 231 of interest is photographed in the actual facilities using a camera, and a picture 303 presents an example of such real photographed pictures. The image processing program 130b processes this picture 303 and outputs a picture 304 with a detected straight line 304a accurately matching with the edge portion 231a.

As can be seen from the above description, a highly robust image processing program can be generated through learning from many input pictures taken under different conditions and target pictures corresponding to those input pictures. Also, the proposed program generation apparatus 100 can generate many input pictures taken under different conditions and their corresponding target pictures in a short time and in an efficient manner, as well as reducing the operator's workload.

The processing functions of the above-described apparatuses (i.e., image processing apparatus 1 and program generation apparatus 100) may be implemented on a computer. In that case, the processes that each apparatus is supposed to perform are encoded in a program, and a computer executes the program to provide the above-described functions. The program that describes what the computer is to do may be stored in a computer-readable medium. Computer-readable media include, for example, magnetic storage devices, optical discs, magneto-optical storage media, and semiconductor memory devices. Magnetic storage devices include, for example, hard disk drives (HDD), flexible disks (FD), and magnetic tapes. Optical discs include, for example, digital versatile discs (DVD), DVD-RAM, compact disc read-only memories (CD-ROM), CD-Recordable (CD-R), and CD-Rewritable (CD-RW). Magneto-optical storage media include, for example, magneto-optical discs (MO).

For the purpose of distributing programs, DVDs, CD-ROMs, and other portable storage media containing the programs may be put up for sale. It is also possible to distribute programs via networks, in which case several program files are made available on a server computer for transfer to other computers.

For example, a computer reads out programs from a portable storage medium, or downloads them from a server computer, and installs these programs in its local storage device. The computer reads programs out of the local storage device and execute their processing functions. As an alternative method, the computer may execute programs directly on a portable storage medium to perform their processing functions. Another alternative method is that the computer downloads programs from a server computer coupled thereto via a network and executes programmed functions upon delivery of each program.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Reference Signs List

1: image processing apparatus
1a: input picture generation unit
1b: target picture generation unit
1c: geometric data
1d: storage unit
2: virtual space
3: object of interest
3a: feature portion
4a, 4b: cameras
5a, 5b, 5c: vertices
11a, 11b: input pictures
12a, 12b: target pictures

## Claims

1. An image processing apparatus comprising:
an input picture generation unit that generates a virtually photographed picture including an object of interest photographed in a virtual space, and outputs the virtually photographed picture as an input picture for use in generating an image processing program through learning; and
a target picture generation unit that receives selection of feature data corresponding to a feature portion of the object of interest, from among geometric data representing a three-dimensional shape of the object of interest, calculates a projected position of the feature portion in the input picture, based on the feature data, and generates a target picture corresponding to the input picture, based on the projected position.

2. The image processing apparatus according to claim 1, wherein:
the selection of feature data selects data indicating vertices associated with the feature portion, the vertices belonging to polygons that represent the shape of the object of interest.

3. The image processing apparatus according to claim 2, wherein:
the target picture generation unit causes a monitor device to display a polygon model that represents the shape of the object as a combination of polygons, and receives selection of vertices associated with the feature portion from among vertices sitting on the polygon model.

4. The image processing apparatus according to claim 2 or 3, wherein:
the target picture generation unit selects three-dimensional coordinates of the associated vertices as the feature data, transforms the three-dimensional coordinates into projected coordinates, assuming that the associated vertices are projected onto the input picture, and generates the target picture by drawing an area of the feature portion, based on the projected coordinates.

5. The image processing apparatus according to any one of claims 1 to 4, wherein:
the input picture generation unit outputs the input picture in plurality by generating the virtually photographed picture in plurality while varying imaging conditions; and
the target picture generation unit calculates the projected position in plurality respectively in the plurality of input pictures, and generates the target picture in plurality respectively corresponding to the plurality of input pictures, based on the plurality of projected positions.

6. The image processing apparatus according to claim 5, wherein:
the input picture generation unit constructs virtual facilities in the virtual space to place the object of interest therein, and generates the input picture in plurality while varying the virtual facilities from one state to another state.

7. The image processing apparatus according to claim 6, wherein:
the virtual facilities include a camera that photographs the object of interest; and
the input picture generation unit further varies parameters that control photographing operation by the camera.

8. The image processing apparatus according to claim 6 or 7, wherein:
the virtual facilities include a light source that iluminates the object of interest; and
the input picture generation unit further varies the light source from one state to another state.

9. The image processing apparatus according to any one of claims 1 to 9, further comprising:
a program generation unit that generates the image processing program through learning from the input picture and the target picture.

10. An image processing method comprising:
generating, by a computer, a virtually photographed picture including an object of interest photographed in a virtual space, and outputting the virtually photographed picture as an input picture for use in generating an image processing program through learning;
receiving, by the computer, selection of feature data corresponding to a feature portion of the object of interest, from among geometric data representing a three-dimensional shape of the object of interest;
calculating, by the computer, a projected position of the feature portion in the input picture, based on the feature data; and
generating, by the computer, a target picture corresponding to the input picture, based on the projected position.

11. An image processing program that causes a computer to execute a process comprising:
generating a virtually photographed picture including an object of interest photographed in a virtual space, and outputting the virtually photographed picture as an input picture for use in generating an image processing program through learning;
receiving selection of feature data corresponding to a feature portion of the object of interest, from among geometric data representing a three-dimensional shape of the object of interest;
calculating a projected position of the feature portion in the input picture, based on the feature data; and
generating a target picture corresponding to the input picture, based on the projected position.
